Europäisches Patentamt

European Patent Office

Office européen des brevets

(19)

(11) Veröffentlichungsnummer: **0 155 511**
**B1**

(12) **EUROPÄISCHE PATENTSCHRIFT**

(45) Veröffentlichungstag der Patentschrift: **26.09.90**

(21) Anmeldenummer: **85101738.4**

(22) Anmeldetag: **16.02.85**

(51) Int. Cl.$^5$: **G 01 N 31/22**

(54) Verfahren zur Herstellung von Reagenzfilmen.

(30) Priorität: **22.02.84 DE 3406328**

(43) Veröffentlichungstag der Anmeldung:
**25.09.85 Patentblatt 85/39**

(45) Bekanntmachung des Hinweises auf die
Patenterteilung:
**26.09.90 Patentblatt 90/39**

(84) Benannte Vertragsstaaten:
**AT BE CH DE FR GB IT LI LU NL SE**

(56) Entgegenhaltungen:
**US-A-3 635 713**

(73) Patentinhaber: **BOEHRINGER MANNHEIM GMBH**
**Sandhofer Strasse 116**
**D-6800 Mannheim 31 (DE)**

(72) Erfinder: **Rothe, Anselm, Dr.rer.nat.**
**Tiefen Klinger Weg 21**
**D-6943 Birkenau (DE)**
Erfinder: **Sojka, Bernward Karl, Dr.rer.nat.**
**Konrad-Adenauer-Allee 88**
**D-6806 Viernheim (DE)**
Erfinder: **Trasch, Heinz-Friedrich, Dr.rer.nat.**
**Wissmannstrasse 14**
**D-6700 Ludwigshafen (DE)**
Erfinder: **Werner, Wolfgang, Dr.rer.nat.**
**Meissener Weg 39**
**D-6800 Mannheim 31 (DE)**
Erfinder: **Wielinger, Hans Eckhard, Dr.phil.**
**Im Langgewann 7**
**D-6940 Weinheim (DE)**

# EP 0 155 511 B1

**Beschreibung**

Bei der Herstellung von Rohfilmmassen, die weiterhin zu optischen Filmen, vor allem zu Reagenzfilmen verarbeitet werden, sind folgende Voraussetzungen einzuhalten: Die Rohfilmmasse muß während der gesamten Weiterverarbeitungszeit die gleiche physikalische Konsistenz haben, d.h. sie darf sich über eine diskrete Standzeit durch Sedimentieren von eingearbeiteten Partikeln nicht partiell entmischen. Tritt eine partielle Entmischung ein, so kann über die Beschichtungszeit, die im technischen Maßstab mehrere Stunden betragen kann, keine Homogenität innerhalb einer Charge gewährleistet werden.

Weiterhin läßt es sich nur durch technisch aufwenidge Maßnahmen vermeiden, daß während des Herstellungsvorgangs der Rohstoffmasse Luft in diese eingerührt wird. Normalerweise muß diese eingerührte Luft deshalb vor dem Beschichtungsvorgang entfernt werden, damit keine Schaumblasen entstehen, die zu Inhomogenitäten des Beschichtungsfilms führen.

Nach dem gegenwärtigen Stand der Technik kann nur durch einen relativ großen apparativen Aufwand auch eine Masse verarbeitet werden, die bei längerem Stehen sedimentiert; dies geschieht durch ständiges Rühren und Umpumpen der Massen. Die Schaumfreiheit ist bei diesem Vorgang durch Evakuieren des Reaktors zu realisieren. Aufgabe der vorliegenden Erfindung war es deshalb, ein einfacheres Verfahren zur Herstellen und Konservierung von Rohfilmmassen zu finden.

Bisher hat es nicht an Versuchen gefehlt, das Absetzen von Beschichtungsmassen zu vermeiden, sowie das Vermindern bzw. Verhindern der Schaumbildung zu gewährleisten. Dazu sind folgende Maßnahmen bekannt:

Das Absetzen von Beschichtungsmassen kann durch den Zusatz von viskositätserhöhenden Substanzen, wie Alginaten, Dextranen, wasserquellbaren Cellulosederivaten usw., oder Dispergierhilfsmitteln, wie Polyvinylalkoholen, Polyacrylamiden, voll- oder teilvernetzten Polyvinylacetaten, Polyvinylpyrrolidonen, höheren Fettsäuren (z.B. Stearinsäure) bzw. deren Salzen oder höheren Alkoholen (z.B. Cetylalkohol), die verzweigt oder unverzweigt Verwendung finden usw., generell verhindert werden. Solche Zusätze bzw. die durch sie bewirkte Erhöhung der Viskosität führen jedoch zu Schwierigkeiten bei der weiteren Verarbeitung. Die Schaumbildung in Rohfilmmassen kann durch den Zusatz von bekannten Antischaummitteln, Alkoholen, Alkanen etc. vermindert bzw. verhindert werden.

Bei der Herstellung von Reagenzfilmen auf Basis von Kunststoffdispersionen entsprechend DE—A—1.598.153 hat es sich als günstig erwiesen, die Permeabilität bzw. Saugfähigkeit derselben dadurch zu erhöhen, daß in die Filmmasse Pigmente und/oder Partikel mit großen Oberflächen, wie z.B. Diatomeenerde, Titandioxid, Siliziumdioxid, eingearbeitet werden. Es ist selbstverständlich, daß beim Gießen/Ziehen solcher Filme die Rohfilmmasse blasenfrei sein muß bzw. während des ganzen Produktionsvorgangs ein Absetzen der Füllstoffe vermieden werden muß. Ebenso ist es zur Herstellung von Reagenzfilmen gemäß der deutschen Patentanmeldung DE—A—32 47 608.6, angemeldet am 23.12.1982, veröffentlicht am 05.07.1984, notwendig, daß die Rohfilmmasse eine Konsistenz hat, durch die auf dem Gewebe ein Film mit konstanter Naßfilmdicke ausgebildet wird, ohne durch das Gewebe durchzuschlagen. Dieses Absetzen und auch das Durchschlagen kann generell durch Erhöhen der Viskosität der Beschichtungsmasse gesteuert werden. Viskositätserhöhende Mittel sind zwar für Reagenzfilmrohmassen bzw. Reagenzfilme in relativ niedrigen Konzentrationen zulässig, haben aber, wenn sie in größeren Mengen eingesetzt werden, den Nachteil, daß dadurch der prozentuale Anteile der porösen Füllstoffe/Öffner reduziert wird und außerdem die im Film bei der Nachweisreaktion ablaufenden chemischen/biochemischen Reaktionen, negativ beeinflußt werden. Diese Störungen zeichnen sich dadurch aus, daß die Flüssigkeitsaufnahme in den Reaktionsfilm verlangsamt und damit die benötigte Reaktionszeit verlängert wird. Weiterhin kann eine Hydrophobierung des Filmes eintreten und die eingesetzte Enzymaktivität dadurch nicht voll wirksam werden.

Die Aufgabenstellung der vorliegenden Erfindung war daher, für Reagenzfilme, die auf Basis von Kunststoffdispersionen hergestellt werden, ein Verfahren zu binden, das die Schaumbildung minimiert, die hydrophile Eigenschaft des Reagenzfilmes erhält und gleichzeitig ohne störende Viskositätserhöhung das Absetzen der notwenidgen Füllstoffe während des Herstellungs- und Verarbeitungsprozesses (incl. eines Zentrifugationsschritts) der Rohfilmmassen unterbindet sowie ein Durchschlagen der auf Geweben aufgetragenen nassen Rohfilmmasse zu vermeiden.

Überraschenderweise wurde gefunden, daß eine Kombination eines Alkohols mit 5—10 C-Atomen, wie z.B. Hexanol oder i-Amylalkohol, die als Entschäumer bekannt sind, mit einem wasserlöslichen Skleroproteinhydrolysat mit einem Molgewicht von 5 000—50 000, vorzugsweise 5 000—20 000 (z.B. Crotein C aus Collagen, Crolastin aus Elastin, Gelatine etc.), die in einem Mischverhältnis von 0,5—10% Alkohol und 0,5—5% Proteinhydrolysat den Beschichtungsmassen zugesetzt werden, diesen die in der Aufgabenstellung formulierten guten Eigenschaften verleiht.

Bei der Herstellung dieser Reagenzfilme wird wie folgt verfahren:

Zu einer wässrigen Kunststoffdispersion werden die üblichen Hilfsstoffe insbesondere hochmolekulare Quellstoffe, wie z.B. Alginate, verschieden substituierte, wasserquellbare Cellulosederivate, Dextran, Polyacrylsäuren, Polyäthylenglycol, voll- oder teilverseifte Polyvinylacetate, Polyvinylpyrrolidone usw. zugegeben. Dazu werden die für die Nachweisreaktion notwendigen Enzyme, Indikatoren, Puffer und ggf. Netzmittel eingearbeitet, wie z.B. in DE—A—1598153 usw. beschrieben.

2

Zusätzlich werden zur Beschleunigung der Nachweisreaktion (Beschleunigung des Autnehmens von Serum) Füllstoffe, wie Diatomeenerde, Cellulose usw., sowie Detergenzien eingearbeitet. Ohne die erfindungsgemäßen Zusätze lassen sich solche Rohfilmmassen nicht problemlos verarbeiten, es kommt zur Schaumbildung, zum Absetzen der Füllstoffe teilweise bereits vor, aber immer während des zur Beseitigung des Schaums notwendigen Zentrifugierens und bei einer Verarbeitung gemäß Deutsche Patentanmeldung DE—A—32 47 608.6, angemeldet am 23.12.1982, veröffentlicht am 05.07.1984, zu einem Durchschlagen der Beschichtungsmassen durch das zu beschichtende Gewebe.

Durch den Zusatz von z.B. Crotein C alleine zur Rohfilmmasse wird der gewünschte Effekt nicht erzielt, der auch durch die Zugabe von höheren Alkoholen, z.B. Hexanol-1 allein nicht erreicht wird.

Es ist als überraschend anzusehen, daß die erfindungsgemäßen Mischungen aus Skleroproteinhydrolysaten, zusammen mit höheren Alkoholen, die als Suspensions- bzw. Dispersionshilfsmittel bisher nicht bekannt waren in der erfindungsgemäßen Kombination einerseits die für die Verarbeitung notwendige Stabilisierung der Suspension gegen eine Entmischung bewirken, andererseits aber bei der Verarbeitung untergezogene Luft problemlos und ohne Schaumbildung wieder freisetzen, so daß homogene, blasenfreie Rohfilmmassen erhalten werden. Andere viskositätserhöhende Stoffe oder andere Entschäumer ergeben auch in Kombination miteinander nicht die erfindungsgemäßen optimalen Resultate.

Als Grundlage der Rohfilmmasse können z.B. die bereits in der DE—A—15 98 153 genannten wässrigen Kunststoffdispersionen verwendet werden. Beispielhaft seien als Kunststoffe Polyvinylacetat, Polyvinylpropionat, Polyacrylat, Polymethacrylat oder Mischpolymerisate davon, sowie Polyamide, Polystyrol, Polyalkylene etc. genannt. Der Kunstoffanteil der Dispersion beträgt üblicherweise 20 und 60%.

In den folgenden Beispielen ist die Wirkung der erfindungsgemäßen Kombination dargestellt, ohne daß diese darauf beschränkt sein soll.

Beispiel I
Rohfilmzusammensetzung allgemein
    35 KU Glucoseoxidase
    200 Ku Peroxidase
    15 ml 0,5 m Phosphatpuffer, pH 5
    0,3 g Na-Alginat
    25 g Dispersion aus einem Mischpolymeren von Vinylacetat und Vinylpropionat, 50%ig in Wasser
    0,5 g 3,3', 5,5'-Tetramethylbezidin
    0,2 g Phenylsemicarbazid
    1 g Dioctylnatriumsulfosuccinat
    6 ml Methoxyethanol
    20 g Titandioxid
    35 ml Wasser

In die Rohfilmmasse wurden die in Tabelle 1 aufgeführten Mengen Crotein C und Hexanol-1 eingearbeitet.

TABELLE 1

| %er Anteil höherer Alkohol in der Rohfilm-masse | %er Anteil Crotein C in der Roh-filmmasse | Störungen | | |
|---|---|---|---|---|
| | | Schaumbildung | Absetzen von Füllstoffen | Durchschlagen der Beschich-tungsmasse |
| 0 | 0 | stark | + | + |
| 1 | 0 | gering | + | + |
| 2 | 0 | keine | + | + |
| 5 | 0 | keine | + | + |
| 1 | 1 | gering | + | + |
| 1 | 2 | gering | − | − |
| 2 | 2 | keine | − | − |
| 0 | 2 | stark | − | − |
| 3 | 3 | keine | − | − |

3

+: Störung erkennbar

—: Störung nicht erkennbar

Schaumbildung und Absetzen von Füllstoffen wurde visuell, Durchschlagen der Beschichtungsmasse wurde nach dem Beschichten eines multifilen Polyamidgewebes 2 F 131 (Schweizer Seidengazefabrik, Thal) mit einer Naßfilmdicke von 200 µm durch anschließendes Betrachten der Gewebeunterseite geprüft.

Es wird also gezeigt, daß die Zusätze entsprechend dem jeweiligen Bedarf über einen breiten Konzentrationsbereich gewählt werden können. Der durch das erfindungsgemäße Verfahren zu erreichende Effekt wird in entsprechender Weise durch andere höhere Alkohole und andere Skleroproteine oder Skleroproteinhydrolysate erreicht.

Beispiel II

Test zum Nachweis von Glucose in Blut/Serum/Plasma

35 KU Glucoseoxidase

200 KU Peroxidase

1,5 g Crotein C

35 ml Wasser bidest.

25 g Dispersion aus einem Mischpolymeren von Vinylacetat und Vinylpropionat, 50%ig in Wasser

0,3 g Alginat

15 ml 0,5 M Phosphatpuffer, pH 5

0,5 g 3,3′, 5,5′-Tetramethylbenzidin

0,2 g Phenylsemicarbazid

6 ml Methoxyethanol

1 g Dioctylnatriumsulfosuccinat

2,0 ml i-Amylalkohol

20 g Titandioxid

werden zu einer homogenen Masse verarbeitet und mit 0,15 mm Spaltbreite auf ein 250 µm dickes multifiles Polyamidgewebe (2 F 131, Schweizer Seidengazefabrik, Thal) beschichtet und getrocknet.

Während der Vorbereitung der Ansatzmasse für die Beschichtung wird eingerührte Luft durch Zentrifugieren bei 200—250 g entfernt. Nach der Zentrifugation ist kein Anreichern von Füllstoffen am Boden des Zentrifugationsgefäßes zu beobachten. Eine Schaumbildung ist ebenfalls nicht zu beobachten.

Die Masse wird kontinuierlich auf das multifile Polyamidgewebe beschichtet. Ein Durchschlagen der Masse ist dabei nicht zu beobachten.

Das getrocknete, beschichtete Gewebe wird in 5 mm breite Streifen geschnitten. Diese werden zusammen mit einem 5 mm breiten Streifen aus mit Silikonöl hydrophobiertem Filterpapier mittels eines dünnen Nylonnetzes (Fadenstärke 40 µm, Maschenweite 50 µ) auf einer 250 µ dicken, 8—10 cm breiten Folie befestigt, sodaß das Papier direkt auf der Folie aufliegt und das Gewebe mit der Filmseite nach oben darauf zu liegen kommt. Das Nylonnetz wird neben diesen Streifen auf der Folie angeklebt, sodaß es durch seine Spannung die Streifen ca. 5 mm neben den Rand der Folie festklemmt. Danach wird der ganze Verband in Teststreifen von 5 mm Breite geschnitten.

Diese Streifen geben nach Befeuchten mit Serum in Abhängigkeit von der Glucosekonzentration gleichmäßige grün bis blaue Farbreaktionen.

Beispiel III

Test zum Nachweis von Glucose im Harn

40 KU Glucoseoxidase

160 KU Peroxidase

2 g Reticusol

10 ml 1 m Citratpuffer, pH 5

0,25 g Na-Alginat

30 g Dispersion aus einem Mischpolymeren von Vinylacetat und Vinylpropionat, 50%ig in Wasser

0,7 g 3,3′, 5,5′-Tetramethylbenzidin

0,2 g Phenylsemicarbazid

10 ml Methanol

1 g Dioctylnatriumsulfosuccinat

20 g Kieselgel

25 ml Wasser

4 ml Hexanol-1

werden zu einer homogenen Masse verarbeitet und mit 0,1 mm Spaltbreite auf ein 350 µm dickes Polyester-Vlies (DuPont/Remey 2033) beschichtet und getrocknet. Der so erhaltene Träger wird wie in Beispiel II zu Teststreifen weiterverarbeitet.

Durch den hohen Hexanolanteil ist es nicht notwenig, die Masse zu zentrifugieren, da so gut wie keine Luft in der Masse eingeschlossen ist. Eine Sedimentation von Füllstoffen, bei Standzeiten bis zu 6 Stunden, ist nicht zu beachten.

Die Masse läßt sich einwandrei, ohne Durchschlagen, auf Gewebe oder Vlies beschichten.

Beispiel IV

Test zum Nachweis von Harnsäure im Blut

40 KU Peroxidase

1 KU Uricase

1,0 g Crolastin

20 g Dispersion aus einem Mischpolymeren von Vinylacetat und Vinylpropionat, 50%ig in Wasser

0,25 g Na-Alginat

0,5 g nichtionogenes Netzmittel

0,05 g EDTA-NA

3 ml i-Butanol

20 g Kieselgur

20 ml 0,2 m Phosphatpuffer, pH 7

0,4 g Primaquin-diphosphat

18 ml Wasser

werden zu einer homogenen Masse verarbeitet und mit 0,2 mm Spaltbreite auf eine 140 µm dicke Polycarbonatfolie (Pokalon K, einseitig matt, Firma Lonza, Weil am Rhein) beschichtet und getrocknet.

Die weitere Fertigung zu Teststreifen erfolgt analog zu Beispiel II.

Die Ansatzmasse ist zentrifugierbar und zeigt kein Absetzen von Füllstoffen bei 250 g, Schaumbildung wurde nicht beobachtet.

Beispiel V

Vergleich verschiedener Skleroproteinhydrolysate.

Rezeptur

20 g Natriumalginat (1,7%ig in Phosphatpuffer 0,5 m pH5

30 g Dispersion aus einem Mischpolymeren von Vinylacetat und Vinylpropionat, 50%ig in Wasser

10 g Dodecylbenzosulfonat (15%ig in Wasser)

20 g Cellulosepulver

8 g Methoxyäthanol

0,7 g Hexanol-1

1,4 g Skleroproteinhydrolysat

21,5 g Wasser

Die vorstehenden Komponenten werden mit einen schnellaufenden Rührer gründlich vermischt und etwaige, beim Vermischen eingerührte Luft durch Zentrifugieren bei 200—250 g an die Oberfläche befördert. Die Schaumbildung und eine eventuelle Bodensatzbildung sowie Dichte und Viskosität der Mischung werden anschließend bestimmt. Anschließend wird die Masse wie im Beispiel I auf ein multifiles Polyamidgewebe gestrichen und das Durchschlagen auf die Unterlage sowie die Qualität der nach dem Trocknen zurückbleibenden Beschichtung beurteilt. Die Versuchsergebnisse sind in der folgenden Tabelle zusammengefaßt. Es zeigt sich, daß höhermolekulare Proteinhydrolysate (Gelatine A+B), die nur in heißem Wasser löslich sind, die Viskosität der Mischung stark erhöhen und einerseits zu Schaumbildung führen und andererseits keine glatten Filme ergeben. Kaltlösliche Hydrolysate weisen dagegen weder Schaumbildung noch Bodensatz auf und führen zu glatten Filmen.

In der Tabelle bedeuten:

− kein Befund

+ geringer Befund

++ deutlicher Befund

+++ starker Befund

| | Schaum | Boden-satz | Durchschlag beim Be-schichten | Beschichtung | Dichte 20° | Viskosität |
|---|---|---|---|---|---|---|
| Gelatine A MG>100 000 sauer aufgeschlossen | ++ | − | − | Orangenhaut-bildung | 1,1604 | 556,8 mPas 212% |
| Gelatine B MG ca. 100 000 alkalisch aufgeschlossen | ++ | − | − | Orangenhaut schwach | 1,1619 | 489,1 mPas 186% |
| Gelatine ASF MG 10—20 000 | + | − | (+) | Klare Be-schichtung glatte Oberfläche | 1,1618 | 228,7 mPas 87% |
| Gelatine GSD MG 5—30 000 | + | − | + Leichter Durchschlag direkt nach Beschicht. | durch die Unterlage strukturierte Oberfläche | 1,1573 | 236,8 mPas 90% |
| Croteine | + | − | − | durch die Unterlage strukturierte Oberfläche | 1,1614 | 262,6 mPas (100%) |

EP 0 155 511 B1

# EP 0 155 511 B1

**Patentansprüche**

1. Verfahren zur Herstellung eines Reagenzfilmes, bei dem eine Rohfilmmasse enthaltend eine wässrige Kunststoffdispersion, die übliche Hilfsstoffe, insbesondere hochmolekulare Quellstoffe, Füllstoffe und für eine Nachweisreaktion notwendige Reagenzien enthält, auf einer festen Unterlage oder einem dünnen Gewebe zu einer dünnen Schicht ausgestrichen und getrocknet wird, dadurch gekennzeichnet, daß der Rohfilmmasse 0,5 bis 5% eines Skleroproteinhydrolysats mit einem Molgewicht von 5000 bis 50000 und 0,5 bis 10% eines höheren Alkohols mit 5 bis 10 C-Atomen zugesetzt werden.

2. Verfahren gemäß Anspruch 1, dadurch gekennzeichnet, daß als Skleroproteinhydrolysat ein Collagen oder Elastinhydrolysat, insbesondere Crotein C und Crolastin zugesetzt wird.

3. Verfahren gemäß einem der Ansprüche 1 und 2, dadurch gekennzeichnet, daß als Alkohol Hexanol oder Isoamylalkohol verwendet wird.

4. Reagenzfilme hergestellt nach einem Verfahren gemäß Anspruch 1 bis 3.

5. Rohfilmmasse zur Herstellung eines Reagenzfilms, enthaltend eine wässrige Kunststoffdispersion und übliche Hilfsstoffe, insbesondere hochmolekulare Quellstoffe, Füllstoffe und für eine Nachweisreaktion notwendige Reagenzien, gekennzeichnet durch einen Gehalt von 0,5 bis 5% Skleroproteinhydrolysat mit einem Molgewicht von 5000 bis 50000 und 0,5 bis 10% eines Alkohols mit 5 bis 10 C-Atomen.

6. Rohfilmmasse gemäß Anspruch 5, dadurch gekennzeichnet, daß als weitere Hilfsstoffe Puffer, Netzmittel, Emulgatoren, viskositätsregulierende Stoffe enthalten sind.

**Revendications**

1. Procédé de préparation d'un film réactif, dans lequel on enduit un support solide ou un tissu fin avec une couche mince d'une masse brute de film, contenant une dispersion aqueuse de matière plastique, qui comprend des additifs usuels, en particulier des substances gonflantes de masse moléculaire élevée, des charges et les réactifs nécessaires pour une réaction de détection, et l'on sèche, caractérisé en ce que la masse brute de film contient 0,5 à 5% d'un hydrolysat de scléroprotéine, ayant une masse moléculaire de 5000 à 50 000, et 0,5 à 10% d'un alcool supérieur comportant 5 à 10 atomes de carbone.

2. Procédé selon la revendication 1, caractérisé en ce que comme hydrolysat de scléroprotéine, on ajoute un hydrolysat de collagène ou d'élastine, en particulier la crotéine C et la crolastine.

3. Procédé selon l'une des revendications 1 ou 2, caractérisé en ce que comme alcool, on utilise l'hexanol ou l'alcool isoamylique.

4. Film réactif préparé par un procédé selon les revendications 1 à 3.

5. Masse brute de film pour la préparation d'un film réactif, contenant une dispersion aqueuse de matière plastique et des additifs usuels, en particulier des substances gonflantes de masse moléculaire élevée, des charges et les réactifs nécessaires pour une réaction de détection, et l'on sèche, caractérisée en ce que la masse brute de film contient 0,5 à 5% d'hydrolysat de scléroprotéine ayant une masse moléculaire de 5000 à 50 000, et 0,5 à 10% d'un alcool supérieur comportant 5 à 10 atomes de carbone.

6. Masse brute de film selon la revendication 5, caractérisée en ce que comme adjuvant supplémentaire, elle contient un tampon, un agent mouillant, un agent émulsifiant et des substances régulant la viscosité.

**Claims**

1. Process for the production of a reagent film in which a crude film mass containing an aqueous synthetic resin dispersion, which contains usual adjuvants, especially high molecular swelling materials, filling materials and reagents necessary for a detection reaction, is coated on to a solid support or on to a thin fabric to give a thin layer and dried, characterised in that to the crude film mass are added 0.5 to 5% of a scleroprotein hydrolysate with a molecular weight of 5000 to 50,000 and 0.5 to 10% of a higher alcohol with 5—10 C-atoms.

2. Process according to claim 1, characterised in that, as scleroprotein hydrolysate, there is used a collagen or elastin hydrolysate, especially crotein C and crolastin.

3. Process according to one of claims 1 and 2, characterised in that, as alcohol, there is used hexanol or isoamyl alcohol.

4. Reagent films produced by the process according to any of claims 1 to 3.

5. Crude film mass for the production of a reagent film, containing an aqueous synthetic resin dispersion and usual adjuvants, especially high molecular swelling materials, filling materials and reagents necessary for a detection reaction, characterised by a content of 0.5 to 5% scleroprotein hydrolysate with a molecular weight of 5000 to 50,000 and 0.5 to 10% of an alcohol with 5 to 10 C-atoms.

6. Crude film mass according to claim 5, characterised in that, as further adjuvants, buffers, wetting agents, emulsifiers, viscosity-regulating materials are contained.